(19) Europäisches Patentamt
European Patent Office
Office européen des brevets

(11) Veröffentlichungsnummer: **0 358 080 B1**

(12) **EUROPÄISCHE PATENTSCHRIFT**

(45) Veröffentlichungstag der Patentschrift: **01.12.93**

(51) Int. Cl.[5]: **C09B 47/04**, G11B 7/24

(21) Anmeldenummer: **89115867.7**

(22) Anmeldetag: **29.08.89**

# (54) Siliciumnaphthalocyanine mit ungesättigten Liganden sowie optisches Aufzeichnungsmedium.

(30) Priorität: **03.09.88 DE 3830041**

(43) Veröffentlichungstag der Anmeldung:
**14.03.90 Patentblatt 90/11**

(45) Bekanntmachung des Hinweises auf die Patenterteilung:
**01.12.93 Patentblatt 93/48**

(84) Benannte Vertragsstaaten:
**BE CH DE FR GB IT LI NL**

(56) Entgegenhaltungen:
**EP-A- 0 203 826**
**EP-A- 0 213 923**
**EP-A- 0 254 553**

(73) Patentinhaber: **BASF Aktiengesellschaft**
**Carl-Bosch-Strasse 38**
**D-67063 Ludwigshafen(DE)**

(72) Erfinder: **Albert, Bernhard, Dr.**
**Rietburgstrasse 13**
**D-6701 Maxdorf(DE)**
Erfinder: **Neumann, Peter, Dr.**
**Poststrasse 28**
**D-6800 Mannheim 31(DE)**
Erfinder: **Brosius, Sibylle, Dr.**
**L 9, 3**
**D-6800 Mannheim 1(DE)**

EP 0 358 080 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Siliciumnaphthalocyanine der Formel I

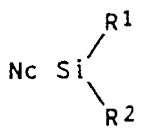 (I),

in der

Nc für den Rest eines Naphthalocyaninsystems steht, das gegebenenfalls durch $C_1$-$C_{12}$-Alkyl, $C_1$-$C_{12}$-Alkoxy, $C_6$-$C_{12}$-Aryl, das gegebenenfalls durch $C_1$-$6_4$-Alkyl substituiert ist, oder Phenyl-$C_1$-$C_6$-alkyl, wobei der Phenylkern gegebenenfalls substituiert ist, substituiert sein kann, und

$R^1$ und $R^2$ gleich oder verschieden sind und unabhängig voneinander jeweils einen Rest der Formel $(O)_nR^3$ bezeichnen worin n für 0 oder 1 und $R^3$ für einen Rest, der 2 bis 20 Kohlenstoffatome aufweist und 1 bis 5 Doppelbindungen und/oder 1 bis 3 Dreifachbindungen enthält, und der weiterhin 1 bis 4 Phenylkerne oder 1 bis 3 gesättigte oder ungesättigte isocyclische 5- bis 7-gliedrige Ringe enthalten kann oder gegebenenfalls durch 1 bis 5 Sauerstoffatome unterbrochen ist, stehen, oder einen Rest der Formel

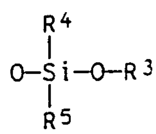

darstellen,

worin $R^3$ die obengenannte Bedeutung besitzt und $R^4$ und $R^5$ gleich oder verschieden sind und unabhängig voneinander jeweils für $C_1$-$C_{20}$-Alkyl, $C_1$-$C_{20}$-Alkoxy oder den Rest $(O)_nR^3$, wobei n und $R^3$ jeweils die obengenannte Bedeutung besitzen, stehen, oder der Rest $R^1$ auch $C_1$-$C_{20}$-Alkyl bedeuten kann, mit der Maßgabe, daß mindestens einer der Reste $R^1$ und $R^2$ für den Rest der Formel

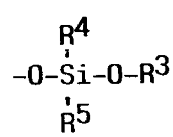

steht,

sowie optisches Aufzeichnungsmedium, enthaltend einen Träger und eine gegenüber Strahlung empfindliche Schicht, die die neuen Verbindungen enthält.

Aufzeichnungsmaterialien, die mit Strahlen hoher Energiedichte, z.B. Laserlicht, eine lokal begrenzte Zustandsänderung erfahren, sind bekannt. Mit dieser thermisch ausgelösten Zustandsänderung, z.B. Verdampfen, Änderung des Fließverhaltens oder Ausbleichen, ist eine Änderung der optischen Eigenschaften, beispielsweise der Reflexion oder Absorption durch Änderung des Absorptionsmaximums oder der Extinktion verbunden, welche zur Informations- oder Datenaufzeichnung ausgenutzt werden kann.

Als Lichtquelle für ein optisches Aufnahmesystem eignen sich beispielsweise Halbleiterlaser, die Licht im nahen Infrarot emittieren. Festkörper-Injektionslaser, vor allem der AlGaAs-Laser, der im Wellenlängenbereich zwischen etwa 650 und 900 nm arbeitet, sind hierbei besonders zu nennen. Daher besteht besonders Interesse an solchen Aufzeichnungsmaterialien, die Strahlung im Wellenlängenbereich zwischen ca. 650 und 900 nm absorbieren und sich zu dünnen, homogenen Schichten verarbeiten lassen.

Aus J. Am. Chem. Soc. Band 106, S. 7404 bis 7410, 1984, sowie aus der EP-A-191 215 und EP-A-191 970 sind Siliciumnaphthalocyanine bekannt, deren Liganden, die sich am zentralen Sillciumatom befinden, jeweils noch ein Siliciumatom enthalten, wobei die Siliciumatome nur gesättigte Kohlenwasserstoffreste als Substituenten aufweisen. Es hat sich jedoch gezeigt, daß die dort beschriebenen Verbindungen bei ihrer

Anwendung in optischen Speichern noch Mängel aufweisen. Auch die EP-A-254 553 beschreibt solche Verbindungen.

Aufgabe der vorliegenden Erfindung war es, neue strahlungsempfindliche Produkte bereitzustellen, die im Wellenlängenbereich der verwendeten Halbleiterlaser eine gute Reflexion und eine hohe Absorption aufweisen.

Demgemäß wurden die oben näher bezeichneten Siliciumnaphthalocyanine der Formel I gefunden.

Die neuen Siliciumnaphthalocyanine eignen sich in vorteilhafter Weise als strahlungsempfindliche Komponenten in optischen Aufzeichnungsmedien.

Alle in den erfindungsgemäßen Verbindungen auftretenden gesättigten und ungesättigten Reste können sowohl geradkettig als auch verzweigt sein.

Wenn in den erfindungsgemäßen Verbindungen substituierte Phenylreste auftreten, kommen als Substituenten, sofern nicht anders vermerkt, z.B. $C_1$-$C_4$-Alkyl, $C_1$-$C_4$-Alkoxy oder Halogen, dabei insbesondere Fluor, Chlor oder Brom, in Betracht.

Geeignete Reste $R^4$ und $R^5$ sowie geeignete Substituenten für das Naphthalocyaninsystem sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isoocytyl, Nonyl, Isononyl, Decyl, Isodecyl, 4-Ethyloctyl, Undecyl, Dodecyl, Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, 4-Ethyloctyloxy, Undecyloxy oder Dodecyloxy.

Reste $R^4$ und $R^5$ sind weiterhin z.B. Tridecyloxy, 3, 5, 5, 7-Tetramethylnonyloxy, Isotridecyloxy, Tetradecyloxy, Pentadecyloxy, Hexadecyl, Heptadecyloxy, Octadecyloxy, Nonadecyloxy oder Eicosyloxy. (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.)

Geeignete Substituenten für das Naphthalocyaninsystem sind weiterhin z.B. Benzyl, 1- oder 2-Phenylethyl, Methylbenzyl, Methoxybenzyl oder Chlorbenzyl.

$C_6$-$C_{12}$-Aryl, das gegebenenfalls durch $C_1$-$C_4$-Alkyl substituiert ist, ist vorzugsweise Phenyl oder Biphenyl, das gegebenenfalls durch $C_1$-$C_4$-Alkyl substituiert ist. Beispielsweise ist Phenyl, 4-Methylphenyl, Biphenyl oder 4'-Methylbiphenyl zu nennen.

Reste $R^3$ sind z.B. Vinyl, Allyl, Prop-1-en-1-yl, Methallyl, Ethallyl, Pentenyl, Pentadienyl, Hexadienyl, 3,7-Dimethylocta-1,6-dien-1-yl, 3,7-Dimethylocta-1,6-dien-2-yl, Undec-10-en-1-yl, 6,10-Dimethylundeca-5,9-dien-2-yl, 3,7,11-Trimethyldodeca-1,6,10-trien-1-yl, 3,7,11-Trimethyldodeca-2,6,10-trien-1-yl, Octadec-9-en-1-yl, Octadeca-9,12-dien-1-yl, Octadeca-9,12,15-trien-1-yl, 6,10,14-Trimethylpentadeca-5,9,13-trien-2-yl, 3,7,11,15-Tetramethylhexadec-1-en-3-yl, Pent-3-in-1-yl, Hex-3-in-1-yl, Non-3-in-1-yl, 3,7-Dimethyloct-6-en-1-in-3yl, 4-(2,6,6-Trimethylcyclohex-1-en-1-yl)but-3-en-2-yl oder 1-Ethinylcyclohex-1-yl.

Bevorzugt sind solche Siliciumnaphthalocyanine der Formel I, in der Nc den Rest eines unsubstituierten Naphthalocyaninsystems bedeutet.

Weiterhin bevorzugt sind Siliciumnaphthalocyanine der Formel I, in der Nc den Rest eines Naphthalocyaninsystems bedeutet, das durch $C_1$-$C_{12}$-Alkyl oder $C_1$-$C_{12}$-Alkoxy substituiert ist.

Weiterhin bevorzugt sind Siliciumnaphthalocyanine der Formel I, in der $R^1$ und $R^2$ unabhängig voneinander einen Rest der Formel $(O)_n$ $R^3$ bedeuten, worin n für 0 und $R^3$ für einen Rest, der 2 bis 20 Kohlenstoffatome und 1 bis 3 Doppelbindungen und/oder eine Dreifachbindung enthält, stehen.

Weiterhin bevorzugt sind Siliciumnaphthalocyanine der Formel I, in der $R^4$ und $R^5$ unabhängig voneinander $C_1$-$C_{20}$-Alkyl oder $C_1$-$C_8$-Alkoxy bedeuten.

Besonders bevorzugt sind Siliciumnaphthalocyanine der Formel I, in der $R^4$ und $R^5$ unabhängig voneinander $C_1$-$C_{12}$-Alkyl, insbesondere $C_6$-$C_{12}$-Alkyl, bedeuten.

Weiterhin besonders bevorzugt sind Siliciumnaphthalocyanine der Formel I, in der $R^1$ und $R^2$ unabhängig voneinander einen Rest der Formel $(O)_n$ $R^3$ bedeuten, worin n für 0 und $R^3$ für einen Rest, der 3 bis 20 Kohlenstoffatome und 1 bis 3 Doppelbindungen enthält, stehen.

Insbesondere hervorzuheben sind Siliciumnaphthalocyanine der Formel I, in der $R^3$ Vinyl, Allyl, Prop-1-en-1-yl, Methallyl, Ethallyl, Pentenyl, Pentadienyl, Hexadienyl, 3,7-Dimethylocta-1,6-dien-1-yl, 3,7-Dimethylocta-1,6-dien-2-yl, Undec-10-en-1-yl, 6,10-Dimethylundeca-5,9-dien-2-yl, 3,7,11-Trimethyldodeca-1,6,10-trien-1-yl, 3,7,11-Trimethyldodeca-2,6,10-trien-1-yl, Octadec-9-en-1-yl, Octadeca-9,12-dien-1-yl oder Octadeca-9,12,15-trien-1-yl bedeutet.

Die erfindungsgemäßen Siliciumnaphthalocyanine können nach an sich bekannten Methoden, wie sie beispielsweise in J. Org. Chem. USSR (Engl. Transl.) Band 7, S. 364 bis 366, 1971, J. Am. Chem. Soc. Band 106, S. 7404 bis 7410, 1984, oder in der EP-A-191 970 beschrieben sind, erhalten werden.

Als Ausgangsprodukte dienen beispielsweise die entsprechenden Diiminoisoindolenine der Formel II

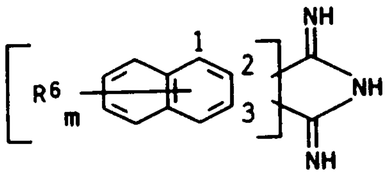

(II),

in der $R^6$ Wasserstoff, $C_1$-$C_{12}$-Alkyl, $C_1$-$C_{12}$-Alkoxy, $C_6$-$C_{12}$-Aryl, das gegebenenfalls durch $C_1$-$C_4$-Alkyl substituiert ist, oder Phenyl-$C_1$-$C_6$-alkyl, wobei der Phenylkern gegebenenfalls substituiert ist, und m 1 oder 2 bedeuten und in der die zur Naphthalocyaninbildung befähigten Substituenten jeweils orthoständig (Position 1 und 2 oder 2 und 3) verknüpft sind.

Die Isoindolenine der Formel II werden dabei in der Regel mit Chlorsilanen der Formel III

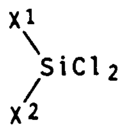

(III),

in der $X^1$ für $C_1$-$C_{20}$-Alkyl, den obgenannten Rest $R^3$ oder Chlor und $X^2$ für den obengenannten Rest $R^3$ oder Chlor stehen, in einem inerten organischen Verdünnungsmittel in Gegenwart einer Base bei einer Temperatur von 170 bis 250 °C mit Siliciumnaphthalocyaninen der Formel IV

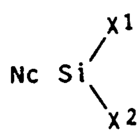

(IV),

in der Nc, $X^1$ und $X^2$ jeweils die oben genannte Bedeutung besitzen, umgesetzt.

Geeignete Verdünnungsmittel sind z.B. Tetralin oder Nitrobenzol.

Als Basen kommen z.B. tertiäre Amine, wie Tributylamin, Chinolin, Picoline oder Collidine in Betracht.

Durch Umsetzung derjenigen Siliciumnaphthalocyanine der Formel IV, in der mindestens einer der beiden Reste $X^1$ und $X^2$ für Chlor steht, mit Alkoholen der Formel V

$R^3$-OH (V),

in der $R^3$ die obengenannte Bedeutung besitzt, bei einer Temperatur von 30 bis 120 °C gelangt man zu solchen Siliciumnaphthalocyaninen der Formel I, in der einer der Reste $R^1$ und $R^2$ oder beide Reste $R^1$ und $R^2$ für den Rest $OR^3$ stehen, wobei $R^3$ die obengenannte Bedeutung besitzt.

Diejenigen Siliciumnaphthalocyanine der Formel IV, in der mindestens einer der beiden Reste $X^1$ und $X^2$ für Chlor steht, können auch mit konzentrierter Schwefelsäure oder mit wäßrigen Basen, z.B. Natronlauge, Kalilauge oder wäßrige Ammoniaklösung, gegebenenfalls in Gegenwart von Pyridin, bei einer Temperatur von 5 bis 80 °C in die entsprechenden Hydroxyverbindungen der Formel VI

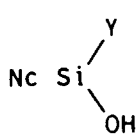

(VI),

in der Y Hydroxy, $C_1$-$C_{20}$-Alkyl oder den obengenannten Rest $R^3$ bedeutet und Nc die oben genannte Bedeutung besitzt, übergeführt werden.

Durch Reaktion der Hydroxyverbindungen VI zunächst mit Chlorsilanen der Formel VII

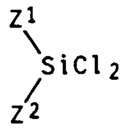

(VII),

in der $Z^1$ und $Z^2$ gleich oder verschieden sind und unabhängig voneinander jeweils für $C_1$-$C_{20}$-Alkyl, den obengenannten Rest $R^3$ oder Chlor stehen, in Pyridin in Gegenwart von Natriumhydrid bei einer Temperatur von 15 bis 150°C und anschließend mit Alkoholen der obengenannten Formel V und gegebenenfalls mit $C_1$-$C_{20}$-Alkanolen bei einer Temperatur von 30 bis 120°C gelangt man schließlich zu den erfindungsgemäßen Siliciumnaphthalocyaninen der Formel I, die die Gruppierung

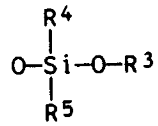

,

in der $R^3$, $R^4$ und $R^5$ jeweils die obengenannte Bedeutung besitzen, aufweisen.

Eine weitere Aufgabe der vorliegenden Erfindung war es, ein neues optisches Aufzeichnungsmedium bereitzustellen, wobei die die neuen Produkte enthaltenden Schichten homogen sein, eine gute Haftung auf den gebräuchlichen Trägermaterialien aufweisen und über einen langen Zeitraum hinweg stabil sein sollten.

Es wurde nun ein optisches Aufzeichnungsmedium, enthaltend einen Träger und eine gegenüber Strahlung empfindliche Schicht gefunden, wobei die gegenüber Strahlung empfindliche Schicht ein Siliciumnaphthalocyanin der Formel I

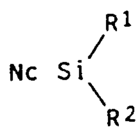

(I)

enthält, in der

Nc für den Rest eines Naphthalocyaninsystems steht, das durch $C_1$-$C_{12}$-Alkyl, $C_1$-$C_{12}$-Alkoxy, $C_6$-$C_{12}$-Aryl, das gegebenenfalls durch $C_1$-$C_4$-Alkyl substituiert ist, oder Phenyl-$C_1$-$C_4$-alkyl, wobei der Phenylkern gegebenenfalls substituiert ist, substituiert sein kann, und

$R^1$ und $R^2$ gleich oder verschieden sind und unabhängig voneinander jeweils einen Rest der Formel $(O)_nR^3$ bezeichnen, worin n für 0 oder 1 und $R^3$ für einen Rest, der 2 bis 20 Kohlenstoffatome aufweist und 1 bis 5 Doppelbindungen und/oder 1 bis 3 Dreifachbindungen enthält, und der weiterhin 1 bis 4 Phenylkerne oder 1 bis 3 gesättigte oder ungesättigte isocyclische 5- bis 7-gliedrige Ringe enthalten kann oder gegebenenfalls durch 1 bis 5 Sauerstoffatome unterbrochen ist, stehen, oder einen Rest der Formel

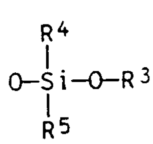

darstellen,

worin $R^3$ die obengenannte Bedeutung besitzt und $R^4$ und $R^5$ gleich oder verschieden sind und unabhängig voneinander jeweils für $C_1$-$C_{20}$-Alkyl, $C_1$-$C_{20}$-Alkoxy oder den Rest $(O)_nR^3$, wobei n und $R^3$ jeweils die obengenannte Bedeutung besitzen, stehen, oder der Rest $R^1$ auch $C_1$-$C_{20}$-Alkyl bedeuten kann, mit der Maßgabe, daß mindestens einer der Reste $R^1$ und $R^2$ für den Rest der Formel

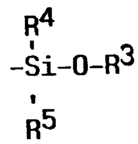

steht.

Die neuen Siliciumnaphthalocyanine der Formel I weisen im nahen Infrarot eine hohe molare Absorption auf. Sie bilden homogene, amorphe Schichten und/oder lassen sich in Farbstoff-in-Polymer-Schichten vorteilhaft einarbeiten.

Bevorzugt ist ein solches optisches Aufzeichnungsmedium, das die ein Siliciumnaphthalocyanin der Formel I, in der Nc den Rest eines unsubstituierten Naphthalocyaninsystems bedeutet, enthält.

Weiterhin bevorzugt ist ein optisches Aufzeichnungsmedium, das Siliciumnaphthalocyanine der Formel I enthält, in der Nc den Rest eines Naphthalocyaninsystems bedeutet, das durch $C_1$-$C_{12}$-Alkyl oder $C_1$-$C_{12}$-Alkoxy substituiert ist.

Weiterhin bevorzugt ist ein optisches Aufzeichnungsmedium, das Siliciumnaphthalocyanine der Formel I enthält, in der $R^1$ und $R^2$ unabhängig voneinander einen Rest der Formel $(O)_n$ $R^3$ bedeuten, worin n für 0 und $R^3$ für einen Rest, der 2 bis 20 Kohlenstoffatome und 1 bis 3 Doppelbindungen und/oder eine Dreifachbindung enthält, stehen.

Weiterhin bevorzugt ist ein optisches Aufzeichnungsmedium, das Siliciumnaphthalocyanine der Formel I enthält, In der $R^4$ und $R^5$ unabhängig voneinander $C_1$-$C_{20}$-Alkyl oder $C_1$-$C_8$-Alkoxy bedeuten.

Besonders bevorzugt ist ein optisches Aufzeichnungsmedium, das Siliciumnaphthalocyanine der Formel I enthält, inder $R^4$ und $R^5$ unabhängig voneinander $C_1$-$C_{12}$-Alkyl, insbesondere $C_6$-$C_{12}$-Alkyl, bedeuten.

Weiterhin besonders bevorzugt ist ein optisches Aufzeichnungsmedium, das Siliciumnaphthalocyanine der Formel I enthält, in der $R^1$ und $R^2$ unabhängig voneinander einen Rest der Formel $(O)_n$ $R^3$ bedeuten, worin n für 0 und $R^3$ für einen Rest, der 3 bis 20 Kohlenstoffatome und 1 bis 3 Doppelbindungen enthält, stehen.

Insbesondere hervorzuheben ist ein optisches Aufzeichnungsmedium, das Siliciumnaphthalocyanine der Formel I enthält, in der $R^3$ Vinyl, Allyl, Prop-1-en-1-yl, Methallyl, Ethallyl, Pentenyl, Pentadienyl, Hexadienyl, 3,7-Dimethylocta-1,6-dien-1-yl, 3,7-Dimethylocta-1,6-dien-2-yl, Undec-10-en-1-yl, 6,10-Dimethylundeca-5,9-dien-2-yl, 3,7,11-Trimethyldodeca-1,6,10-trien-1-yl, 3,7,11-Trimethyldodeca-2,6,10-trien-1-yl, Octadec-9-en-1-yl, Octadeca-9,12-dien-1-yl oder Octadeca-9,12,15-trien-1-yl bedeutet.

Als weitere Komponenten der strahlungsempfindlichen Schicht kommen Polymerisate in Betracht, welche mit den Verbindungen der Formel I verträglich sind. Solche Polymerisate werden im allgemeinen als Bindemittel bezeichnet.

Beispiele geeigneter Bindemittel sind Polystyrole, Polyester, Polyacrylate, Polymethacrylate, Polycarbonate, Polyamine, Polyvinylalkohole, Polyvinylchloride, Copolymere von Vinylchlorid und Vinylacetat oder flüssigkristalline Seitengruppen enthaltende Polymerisate oder Copolymerisate gemäß der EP-A-90 282 oder EP-A-171 045.

Darüber hinaus können die Filme weitere geeignete Zusatzstoffe, wie niedermolekulare flüssigkristalline Verbindungen enthalten.

Bevorzugt ist ein optisches Aufzeichnungsmedium, bei dem die strahlungsempfindliche Schicht nur aus den Siliciumnaphthalocyaninen der Formel I besteht und wobei die Farbstoffe in amorphem Zustand vorliegen.

Der Begriff "amorph" gibt dabei an, daß die strahlungsempfindliche Schicht keine anisotropen Bereiche aufweist, die größer sind als ein Bruchteil der thermisch veränderten Bereiche, sondern daß sie in der Größenordnung von ca. 30 nm und darüber optisch isotrop ist.

Im allgemeinen beträgt die Dicke der strahlungsempfindlichen Schicht 20 bis 400 nm, vorzugsweise 40 bis 300 nm.

Vorzugsweise absorbieren die in den erfindungsgemäßen Aufzeichnungsmedien enthaltenen Farbstoffe Laserlicht, insbesondere Laserlicht relativ langer Wellenlänge (650 bis 900 nm).

Bevorzugt sind solche Aufzeichnungsmedien, bei denen die strahlungsempfindliche Schicht auf einen scheibenförmigen Träger, gegebenenfalls mit einer Reflektorschicht, aufgebracht ist, und die das Schreiben und die Wiedergabe von Informationen mittels eines Halbleiterlasers ermöglichen. Besonders bevorzugt sind dabei solche Aufzeichnungsmedien, die keine Reflektorschicht aufweisen.

Ein so aufgebauter optischer Speicher kann eine Information hoher Dichte in Form spiraler oder kreisförmig konzentrischer Wege, feiner Löcher oder Vertiefungen (von etwa 1 µm Breite), welche optisch durch Änderung der Reflektivität gegenüber der Umgebung feststellbar sind, aufnehmen. Er zeigt einen

guten Kontrast.

Aufgrund der hohen Lichtabsorption der Farbstoffe sind die erfindungsgemäßen Aufzeichnungsmedien sehr empfindlich gegenüber dem Licht des Halbleiter-Lasers.

Der Aufbau eines optischen Aufzeichnungsmediums ist an sich bekannt.

Als Träger kommen z.B. Glasplatten oder -scheiben oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder einer runden Scheibe aufweisen, wobei die für laseroptische Aufzeichnungsmaterialien üblichen und bekannten Scheiben eines Durchmessers von 10 oder 13 cm bevorzugt werden.

Darüber hinaus können die Aufzeichnungsmedien weitere Schichten, wie Schutzschichten, Haftschichten oder Elektrodenschichten aufweisen.

Neben dem Träger kann weiterhin eine reflektierende Schicht vorhanden sein, so daß das eingestrahlte und durch die farbige Schicht wandernde Licht, soweit es nicht absorbiert wird, an der Reflektorschicht reflektiert wird und nochmals durch die gefärbte Schicht wandert.

Die Belichtung erfolgt bevorzugt durch ein transparentes Substrat. Als Schichtfolge kommt dann in Frage: Substrat-Absorberschicht-(gegebenenfalls Reflektor).

Der Träger oder die Licht reflektierende Schicht muß eine optisch glatte, ebene Oberfläche aufweisen, die so beschaffen sein muß, daß die absorbierende Schicht fest darauf haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Sofern die gegenüber Strahlung empfindliche Schicht keine ausreichende mechanische Stabilität aufweist, kann sie mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im Vakuum, vornehmlich von fluorierten Polymeren, eine Schutzschicht bilden können.

Wenn der Datenspeicher aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums aber auch verzichtet werden.

Die erfindungsgemäßen optischen Aufzeichnungsmedien, die die neuen Siliciumnaphthalocyanine enthalten, absorbieren stark bei der Wellenlänge der Halbleiterlaser von ca. 650 bis 900 nm. Die Siliciumnaphthalocyanine können so aufgebracht werden, daß sich glatte Absorptionsschichten von optischer Qualität ergeben, in die die zu speichernde Information mit hohem Signal:Rausch-Verhältnis eingeschrieben werden kann.

Das Aufbringen der Absorptionsmaterialien erfolgt vorzugsweise durch Aufschleudern von gelöstem oder dispergiertem Farbstoff, gegebenenfalls in Gegenwart von Bindemitteln. Auch Rakeln oder Tauchen kommen als Schichtbildungsverfahren in Frage. Das aufbringen z.B. von metallischen Reflektionsschichten erfolgt vorzugsweise durch Aufdampfen im Vakuum oder durch Aufbringen geeigneter Metallfolien auf den Träger.

Für das Aufbringen der Absorptionsschichten aus Lösung oder Dispersion bereitet man in einem geeigneten Lösungsmittel, wie Hexan, Heptan, Octan, Isooctan, Cyclohexan, Methylcyclohexan, Ethylcyclohexan, Methylenchlorid, Chloroform, Tetrachlorkohlenstoff, Bromoform, 1,1,1-Trichlorethan, 1,1,2-Trichlorethan, Aceton, Methylethylketon, Cyclohexanon, Toluol, Acetonitril, Essigester, Methanol, Ethanol, Etheralkohole, wie 2-Methoxyethanol, 2-Ethoxyethanol, 2-Isopropoxyethanol, 3-Methoxypropanol, 3-Ethoxypropanol, 3-Isopropoxypropanol oder Mischungen dieser Lösungsmittel, eine Lösung oder gegebenenfalls eine Dispersion des Siliciumnaphthalocyanins oder Gemischen dieser Verbindungen und gegebenenfalls des Bindemittels und setzt gegebenenfalls ein Hilfsmittel zu.

Diese Farbstoffzubereitung wird dann durch Rakeln oder Tauchen, vorzugsweise aber durch Aufschleudern ("Spin-coating") auf ein vorher gereinigtes oder gegebenenfalls vorbehandeltes Substrat ("Subbing-layer") aufgebracht und die Schicht an der Luft getrocknet oder gehärtet. Der Film kann auch im Vakuum bei erhöhter Temperatur, oder gegebenenfalls mit Strahlung getrocknet oder gehärtet werden.

Wie bereits oben ausgeführt, sind solche optischen Aufzeichnungsmedien bevorzugt, in denen die Schicht nur Siliciumnaphthalocyanine der Formel I aufweist, inbesondere solche, bei denen diese Schicht mittels Spin-coating aufgebracht wird.

Je nach Systemaufbau wird zuerst die strahlungempfindliche Schicht und dann der Reflektor aufgebracht oder umgekehrt verfahren. Auf das Aufbringen von Zwischen- oder Schutzschichten oder einer

reflektierenden Schicht kann, wie bereits oben ausgeführt, gegebenenfalls auch verzichtet werden.

Bevorzugt ist ein Monoschichtsystem ohne Reflektor.

Die erfindungsgemäßen Aufzeichnungsmedien können mittels eines Schreiblaserstrahls mit analogen oder digitalen Daten beschrieben werden, wobei man zum Einschreiben analoger Daten bekanntermaßen einen analog modulierten Dauerstrichlaser und zum Einschreiben digitaler Daten einen impulskodierten Laser verwendet.

Im allgemeinen weisen geeignete Laser bei der Schreibwellenlänge eine Strahlleistung von 1 bis 20 mW auf. Der Fokus-Durchmesser des Schreiblaserstrahls liegt im allgemeinen bei 300 bis 2000 nm. Überlicherweise beträgt die Impulsdauer bei der Bestrahlung mit einem impulscodierten Laser 10 bis 1000 ns. Vorteilhaft verwendet man zum Einschreiben einen Laserstrahl mit Licht einer Wellenlänge, die von der betreffenden Aufzeichnungsschicht gut absorbiert wird. Vorteilhaft sind Wellenlängen von 400 bis 1000 nm.

Beim Schreibvorgang wird der Laserstrahl in relativer Bewegung über das Aufzeichnungsmaterial hinweggeführt und trifft dabei senkrecht auf dieses auf, wobei er auf die Aufzeichnungsschicht fokussiert ist. An der Auftreffstelle wird die Aufzeichnungsschicht lokal erhitzt und es entstehen thermisch veränderte Bereiche, beispielsweise in der Form von Löchern, Kratern oder Flecken. Beim Einschreiben von Daten mit impulskodierten Lasern haben diese Bereiche im wesentlichen eine runde oder ovale Form mit einem Durchmesser von 100 bis 2000 nm. Beim Einschreiben mit einem analog modulierten Dauerstrichlaser können sie beliebige Formen haben.

Die erfindungsgemäßen Aufzeichnungsmedien eignen sich ausgezeichnet für die laseroptische Datenaufzeichnung.

Das Schreiben der Daten in die Aufzeichnungsschicht kann von der dem Träger abgewandten Seite der Schicht her oder durch den optisch klaren Träger hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge liegt unterhalb der Schwellenleistung ab der ein Beschreiben möglich wird. Im allgemeinen liegt die Strahlleistung bei 0,1 bis 1,5 mW. Vorteilhaft verwendet man Laserlicht einer Wellenlänge, die von der Aufzeichnungsschicht stark reflektiert wird. Vorteilhaft ist eine Wellenlänge von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht fokussiert ist.

Trifft der Leselaserstrahl beim Überstreichen der Aufzeichnungsschicht auf einen thermisch veränderten Bereich, beispielsweise einen Fleck, so ändern sich die Eigenschaften des vom Aufzeichnungsmaterials transmittierten oder reflektierten Lichts, was mit Hilfe geeigneter Detektoren nachgewiesen werden kann.

Dabei kann das Lesen der Daten in der Aufzeichnungsschicht von der dem Träger abgewandten Seite der Schicht her oder durch die optisch klaren, transparenten Träger hindurch erfolgen, wobei letzteres von Vorteil ist. Hierbei ist es besonders vorteilhaft, das reflektierte Licht zu erfassen.

Außerdem ist es von besonderem Vorteil, hierzu Schreib- und Leselaser zu verwenden, die im infraroten Wellenlängenbereich von 650 bis 900 nm ausstrahlen. Dabei ist es außerdem von Vorteil, wenn die Schreibwellenlänge mit der Lesewellenlänge identisch ist oder sich nur wenig von ihr unterscheidet. Licht dieser Wellenlängen wird von üblichen und bekannten Halbleiter-Lasern geliefert.

Die erfindungsgemäßen Aufzeichnungsmedien weisen zahlreiche besondere Vorteile auf. So ist ihre unbeschriebene Aufzeichnungsschicht besonders stabil, so daß sie sich selbst nach langer Lagerzeit bei vergleichsweise hoher Temperatur- und Luftfeuchtigkeit noch immer hervorragend für die laseroptische Datenaufzeichnung eignet. Gleiches gilt für die beschriebene Aufzeichnungsschicht; hier tritt selbst bei sehr langer Lagerung kein Informationsverlust ein. Es können daher auch Schreiblaser mit vergleichsweise geringer Lichtleistung verwendet werden. Außerdem weisen die beschriebenen Aufzeichnungsmaterialien einen ganz besonders hohen optischen Kontrast zwischen beschriebenen und unbeschriebenen Bereichen auf, welcher den bisher bekannten optischen Kontrast beschriebener Phthalocyaninschichten übertrifft. Des weiteren wird bei den neuen Aufzeichnungsmaterialien eine Bitdichte von deutlich über 107 bits/$cm^2$ erreicht, wobei die Daten dann auch noch unmittelbar nach dem Einschreiben gelesen werden können.

Die erfindungsgemäßen Siliciumnaphthalocyanine der Formel I weisen weitere sehr gute anwendungstechnische Eigenschaften auf und können daher auch für andere Verwendungszwecke dienen. Insbesondere können sie für die Herstellung von IR-Schutzschichten, IR-absorbierenden Folien, Sonnenbrillenbeschichtungen, Beschichtungen für Autowindschutzscheiben, IR-Tinten, Druckfarben für IR-lesebare Streifencodes, Flüssigkristallanzeigen oder IR-Sicherheitssysteme verwendet werden.

Unter IR-lesbaren Streifencodes sind beispielsweise die auf Warenverpackungen angebrachten Streifencodes zu verstehen, welche der genauen Kennzeichnung der Waren dienen.

Unter Flüssigkristallanzeigen oder "Displays" werden die bekannten Anordnungen verstanden, welche Schichtdicken aus flüssig-kristallinen Stoffen enthalten. Diese Schichten ändern bei Anlegen einer elektrischen Spannung lokal ihre optischen Eigenschaften, wodurch z.B. Zahlen, Buchstaben oder Bilder sichtbar dargestellt (angezeigt) werden können.

Unter IR-Sicherheitssystemen werden Anordnungen verstanden, welche im wesentlichen aus einer Laserlichtquelle und einem geeigneten, räumlich weiter davon entfernten Detektor bestehen. Der von der Laserlichtquelle ausgesandte Laserstrahl trifft dabei auf den Detektor und bildet eine sogenannte Lichtschranke. Wird diese unterbrochen, so wird über den Detektor ein Alarm ausgelöst.

Elektrophotographische Aufzeichnungsmaterialien enthalten im wesentlichen Schichten, welche in der Dunkelheit einen hohen elektrischen Widerstand aufweisen, wohingegen sie bei der Belichtung leitfähig werden. Werden solche Schichten in der Dunkelheit an ihrer Oberfläche elektrostatisch aufgeladen und anschließendd bildmäßig belichtet, so wird die elektrostatische Ladung in den belichteten Bereichen abgeleitet und es entsteht ein elektrostatisches Bild, welches mit Hilfe sogenannter Toner sichtbar gemacht werden kann.

Die folgenden Beispiele sollen die Erfindung näher erläutern.

A) Synthese

Beispiel 1

Synthese von

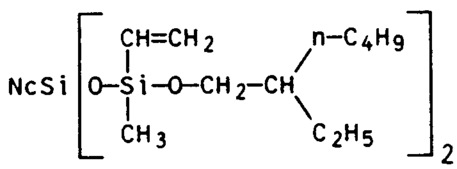

5 g Dihydroxysiliciumnaphthalocyanin wurden zu einer Mischung aus 150 ml Pyridin, 50 ml Toluol und 10 ml Tributylamin gegeben. Man gab dann 0,5 g Natriumhydrid zu und rührte 3 Stunden bei 80 °C. Nach dem Erkalten wurden 10 ml Methyl-vinyl-dichlorsilan $CH_3(CH_2=CH)SiCl_2$ zugegeben, über Nacht bei Raumtemperatur gerührt und danach ca. 100 ml des Reaktionsgemischs abdestilliert.

Nach Zugabe von 7 ml 2-Ethylhexanol wurde 6 Stunden bei ca. 80 °C gerührt, danach unter den gleichen Bedingungen alle flüchtigen Anteile weitgehend abdestilliert, abgekühlt und mit ca. 200 ml Methanol versetzt.

Das Zielprodukt wurde abgesaugt und mit Methanol gewaschen.

Die in den folgenden Tabellen 1 und 2 aufgeführten Verbindungen der Formel

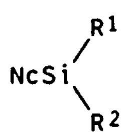

wurden in analoger Weise erhalten. Zusätzlich aufgeführt sind dabei das verwendete Chlorsilan sowie der verwendete Alkohol.

Zur Charakterisierung dieser Verbindungen sind in Tabelle 3 ihre Rf-Werte angegeben.

Tabelle 1

| Verb. Nr. | $R^1=R^2$ | Chlorsilan | Alkohol |
|---|---|---|---|
| 2 | 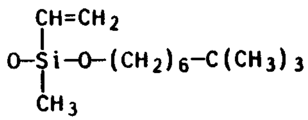 | $CH_3(CH_2=CH)SiCl_2$ | $HO-(CH_2)_6-C(CH_3)_3$ |
| 3 | 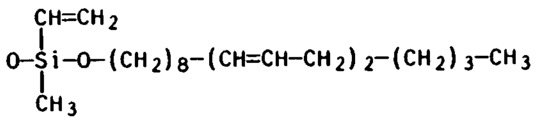 | $CH_3(CH_2=CH)SiCl_2$ | $HO-(CH_2)_8-(CH=CH-CH_2)_3-(CH_2)_3-CH_3$ |
| 4 | 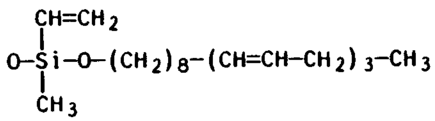 | $CH_3(CH_2=CH)SiCl_2$ | $HO-(CH_2)_8-(CH=CH-CH_2)_3CH_3$ |
| 5 | 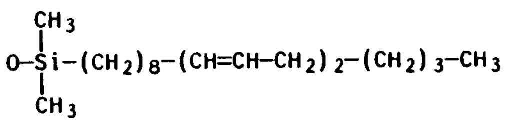 | $(CH_3)_2SiCl_2$ | $HO-(CH_2)_8-(CH=CH-CH_2)_2-(CH_2)_3-CH_3$ |
| 6 | 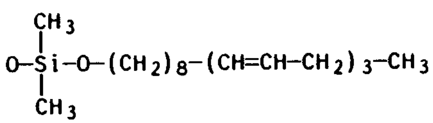 | $(CH_3)_2SiCl_2$ | $HO-(CH_2)_8-(CH=CH-CH_2)_3-CH_3$ |

Tabelle 1 (Fortsetzung

| Verb. Nr. | $R^1=R^2$ | Chlorsilan | Alkohol |
|---|---|---|---|
| 7 | 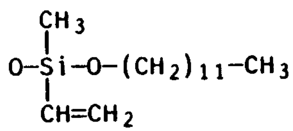 | $CH_3(CH_2=CH)SiCl_2$ | $HO-(CH_2)_{11}-CH_3$ |
| 8 | 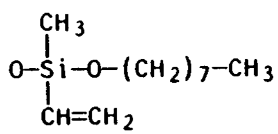 | $CH_3(CH_2=CH)SiCl_2$ | $HO-(CH_2)_7-CH_3$ |

Tabelle 2

| Verb. Nr. | $R^1$ | $R^2$ | Chlorsilan | Alkohol |
|---|---|---|---|---|
| 9 | $n-C_6H_{13}$ | 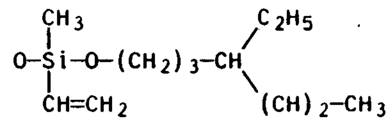 | $CH_3(CH_2=CH)SiCl_2$ | 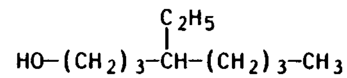 |
| 10 | $n-C_6H_{13}$ | 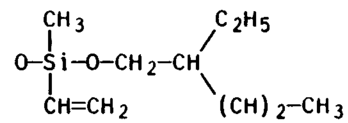 | $CH_3(CH_2=CH)SiCl_2$ | 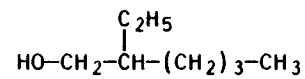 |
| 11 | $n-C_8H_{17}$ | 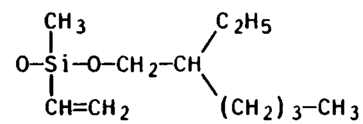 | $CH_3(CH_2=CH)SiCl_2$ | 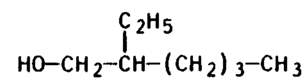 |
| 12 | $n-C_8H_{17}$ | 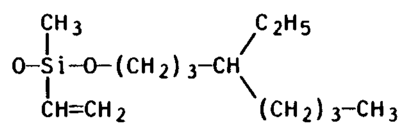 | $CH_3(CH_2=CH)SiCl_2$ | 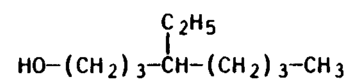 |
| 13 | $n-C_6H_{13}$ | 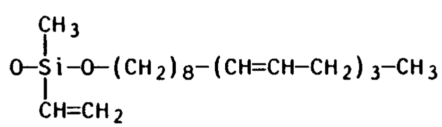 | $CH_3(CH_2=CH)SiCl_2$ | $HO-(CH_2)_8-(CH=CH-CH_2)_3-CH_3$ |

Tabelle 2 (Fortsetzung)

| Verb. Nr. | $R^1$ | $R^2$ | Chlorsilan | Alkohol |
|---|---|---|---|---|
| 14 | $n-C_{12}H_{25}$ | $CH_3$<br>$O-Si-O-(CH_2)_8-(CH=CH-CH_2)_3-CH_3$<br>$CH=CH_2$ | $CH_3(CH_2=CH)SiCl_2$ | $HO-(CH_2)_8-(CH=CH-CH_2)_3-CH_3$ |
| 15 | $n-C_8H_{17}$ | $CH_3$<br>$O-Si-O-(CH_2)_8-(CH=CH-CH_2)_3-(CH_2)_3-CH_3$<br>$CH=CH_2$ | $CH_3(CH_2=CH)SiCl_2$ | $HO-(CH_2)_8-(CH=CH-CH_2)_3-(CH_2)_3-CH_3$ |
| 16 | $n-C_8H_{17}$ | $n-C_6H_{13}$<br>$O-Si-O-(CH_2)_8-(CH=CH-CH_2)_3-(CH_2)_3-CH_3$<br>$CH_3$ | $CH_3(n-C_6H_{13})SiCl_2$ | $HO-(CH_2)_8-(CH=CH-CH_2)_3-(CH_2)_3-CH_3$ |

Tabelle 3

| $R_f$-Werte | | |
|---|---|---|
| Beispiel Nr. | A | Fließmittel: B |
| 1 | 0,65 | |
| 2 | 0,88 | 0,63 |
| 3 | 0,86 | |
| 4 | 0,67 | |
| 5 | 0,61 | |
| 6 | 0,68 | |
| 7 | 0,75 | |
| 8 | 0,61 | |
| 9 | 0,76 | |
| 10 | 0,88 | |
| 11 | 0,80 | |
| 12 | 0,62 | |
| 13 | 0,71 | |
| 14 | 0,38 | |
| 15 | 0,38 | |
| 16 | 0,74 | |

Die oben aufgeführten $R_f$-Werte wurden auf Kieselgel-Platten der Firma Macherey und Nagel (Polygram 0,2 mm, N-HR UV 254) gefunden.

Als Fließmittel diente dabei

A) Toluol

B) Toluol/Hexan (1:1 v/v)

Herstellvorschrift für einen Beschichtungsfilm

1 g der Verbindung aus Beispiel 1 wurde in 20 ml Toluol bei Raumtemperatur über Nacht gerührt und danach mittels Überdruck durch eine Fritte (P4) gepreßt. Die resultierende Lösung wurde dann mittels einer Spritze auf eine rotierende Scheibe aus Polymethylmethacrylate (Durchmesser 12 cm) aufgetragen. Die Lösung wurde dabei bei einer Drehzahl von 2000 U/min 25 sec lang abgeschleudert und anschließend 35 sec bei einer Drehzahl von 5000 U/min trockengeschleudert. Die erhaltene Schicht war homogen, pin-hole-frei und hochreflektierend.

B) Anwendung

Zum Beschreiben und Lesen des Aufzeichnungsmaterials, dessen Herstellung voranstehend beschrieben ist, wurde ein übliches und bekanntes Meßlaufwerk verwendet. Dieses wies einen impulskodierten Laser auf, welcher Licht der Wellenlänge 836 nm mit einer maximalen Schreibleistung von 10 mW aussandte.

Zwecks Detektion der Flecke wurde das von der Aufzeichnungsschicht durch die Disks hindurch reflektierte Licht in üblicher und bekannter Weise erfaßt.

Das Aufzeichnungsmaterial wurde mittels eines Schreiblasers beschrieben. Dabei wurde die Schreibleistung variiert. Beim Lesen wurde die Amplitude der durch die Flecke hervorgerufenen Pulse des reflektierten Leselaserlichts gemessen und als Funktion der Schreibleistung, mit welcher der betreffenden Flecke ursprünglich erzeugt worden waren, aufgezeichnet. In dieser Weise wurde ermittelt, ab welcher Schreibleistung unter den oben angegebenen Bedingungen einwandfreie Signale - die Grundvoraussetzung der Datenaufzeichnung - erhalten werden konnten. Dies war ab einer Schreibleistung von 2,5 mW möglich, was die hohe Empfindlichkeit des erfindungsgemäßen Aufzeichnungsmaterials belegte.

Das Aufzeichnungsmaterial wurde zehn Wochen lang bei 60 °C und einer relativen Luftfeuchtigkeit von 90 % gelagert. Dabei traten keine nachteiligen Veränderungen ein, sondern die aufgezeichneten Daten konnten nach wie vor fehlerfrei gelesen werden.

## Patentansprüche

1. Siliciumnaphthalocyanine der Formel I

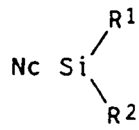 (I),

in der

Nc für den Rest eines Naphthalocyaninsystems steht, das durch $C_1$-$C_{12}$-Alkyl, $C_1$-$C_{12}$-Alkoxy, $C_6$-$C_{12}$-Aryl, das gegebenenfalls durch $C_1$-$C_4$-Alkyl substituiert ist, oder Phenyl-$C_1$-$C_6$-alkyl, wobei der Phenylkern gegebenenfalls substituiert ist, substituiert sein kann, und

$R^1$ und $R^2$ gleich oder verschieden sind und unabhängig voneinander jeweils einen Rest der Formel $(O)_nR^3$ bezeichnen, worin n für 0 oder 1 und $R^3$ für einen Rest, der 2 bis 20 Kohlenstoffatome aufweist und 1 bis 5 Doppelbindungen und/oder 1 bis 3 Dreifachbindungen enthält, und der weiterhin 1 bis 4 Phenylkerne oder 1 bis 3 gesättigte oder ungesättigte isocyclische 5- bis 7-gliedrige Ringe enthalten kann oder gegebenenfalls durch 1 bis 5 Sauerstoffatome unterbrochen ist, stehen, oder einen Rest der Formel

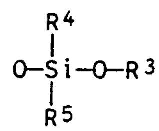

darstellen,
worin $R^3$ die obengenannte Bedeutung besitzt und $R^4$ und $R^5$ gleich oder verschieden sind und unabhängig voneinander jeweils für $C_1$-$C_{20}$-Alkyl, $C_1$-$C_{20}$-Alkoxy oder den Rest $(O)_nR^3$, wobei n und $R^3$ jeweils die obengenannte Bedeutung besitzen, stehen, oder der Rest $R^1$ auch $C_1$-$C_{20}$-Alkyl bedeuten kann, mit der Maßgabe, daß mindestens einer der Reste $R^1$ und $R^2$ für den Rest der Formel

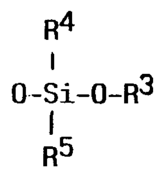

steht.

2. Siliciumnaphthalocyanine der Formel I gemäß Anspruch 1, dadurch gekennzeichnet, daß Nc den Rest eines unsubstituierten Naphthalocyaninsystems bedeutet.

3. Optisches Aufzeichnungsmedium, enthaltend einen Träger und eine gegenüber Strahlung empfindliche Schicht, dadurch gekennzeichnet, daß die gegenüber Strahlung empfindliche Schicht ein Siliciumnaphthalocyanin der Formel I

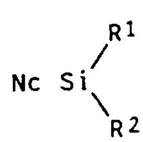 (I)

enthält, in der

Nc für den Rest eines Naphthalocyaninsystems steht, das durch $C_1$-$C_{12}$-Alkyl, $C_1$-$C_{12}$-

Alkoxy, $C_6$-$C_{12}$-Aryl, das gegebenenfalls durch $C_1$-$C_4$-Alkyl substituiert ist, oder Phenyl-$C_1$-$C_6$-alkyl, wobei der Phenylkern gegebenenfalls substituiert ist, substituiert sein kann, und

$R^1$ und $R^2$ gleich oder verschieden sind und unabhängig voneinander jeweils einen Rest der Formel $(O)_nR^3$ bezeichnen, worin n für 0 oder 1 und $R^3$ für einen Rest, der 2 bis 20 Kohlenstoffatome aufweist und 1 bis 5 Doppelbindungen und/oder 1 bis 3 Dreifachbindungen enthält, und der weiterhin 1 bis 4 Phenylkerne oder 1 bis 3 gesättigte oder ungesättigte isocyclische 5- bis 7-gliedrige Ringe enthalten kann oder gegebenenfalls durch 1 bis 5 Sauerstoffatome unterbrochen ist, stehen, oder einen Rest der Formel

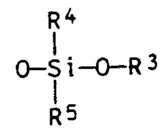

darstellen,

worin $R^3$ die obengenannte Bedeutung besitzt und $R^4$ und $R^5$ gleich oder verschieden sind und unabhängig voneinander jeweils für $C_1$-$C_{20}$-Alkyl, $C_1$-$C_{20}$-Alkoxy oder den Rest $(O)_nR^3$, wobei n und $R^3$ jeweils die obengenannte Bedeutung besitzen, stehen, oder der Rest $R^1$ auch $C_1$-$C_{20}$-Alkyl bedeuten kann, mit der Maßgabe, daß mindestens einer der Reste $R^1$ und $R^2$ für den Rest der Formel

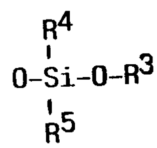

steht.

**4.** Optisches Aufzeichnungsmedium gemäß Anspruch 3, dadurch gekennzeichnet, daß es ein Siliciumnaphtalocyanin der Formel I enthält, in der Nc den Rest eines unsubstituierten Naphthalocyaninsystems bedeutet.

## Claims

**1.** A silicon naphthalocyanine of the formula I

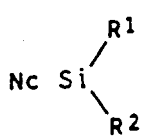

(I)

where

Nc is the radical of a naphthalocyanine system which may be substituted by $C_1$-$C_{12}$-alkyl, $C_1$-$C_{12}$-alkoxy, unsubstituted or $C_1$-$C_4$-alkyl-substituted $C_6$-$C_{12}$-aryl, or by phenyl-$C_1$-$C_6$-alkyl where the phenyl nucleus may be substituted, and

$R^1$ and $R^2$ are identical or different and each is independently of the other a radical of the formula $(O)_nR^3$, where n is 0 or 1 and $R^3$ is a radical which has from 2 to 20 carbon atoms and contains from 1 to 5 double bonds and/or from 1 to 3 triple bonds and which may further contain from 1 to 4 phenyl nuclei or from 1 to 3 saturated or unsaturated isocyclic 5-, 6- or 7-membered rings or which may be interrupted by from 1 to 5 oxygen atoms, are each or a radical of the formula

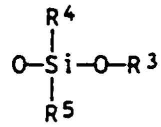

where $R^3$ is as defined above and $R^4$ and $R^5$ are identical or different and each is independently of the other $C_1$-$C_{20}$-alkyl, $C_1$-$C_{20}$-alkoxy or the radical $(O)_nR^3$, where n and $R^3$ are each as defined above, or $R^1$ may also be $C_1$-$C_{20}$-alkyl, with the proviso that at least one of the radicals $R^1$ and $R^2$ is a radical of the formula

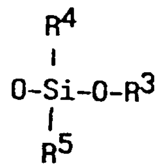

**2.** A silicon naphthalocyanine of the formula I as claimed in claim 1, wherein Nc is the radical of an unsubstituted naphthalocyanine system.

**3.** An optical recording medium comprising a base and a radiation-sensitive layer, wherein the radiation-sensitive layer contains a silicon naphthalocyanine of the formula I

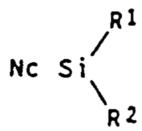 (I)

where

Nc — is the radical of a naphthalocyanine system which may be substituted by $C_1$-$C_{12}$-alkyl, $C_1$-$C_{12}$-alkoxy, unsubstituted or $C_1$-$C_4$-alkyl-substituted $C_6$-$C_{12}$-aryl, or by phenyl-$C_1$-$C_6$-alkyl where the phenyl nucleus may be substituted, and

$R^1$ and $R^2$ — are identical or different and each is independently of the other a radical of the formula $(O)_nR^3$, where n is 0 or 1 and $R^3$ is a radical which has from 2 to 20 carbon atoms and contains from 1 to 5 double bonds and/or from 1 to 3 triple bonds and which may further contain from 1 to 4 phenyl nuclei or from 1 to 3 saturated or unsaturated isocyclic 5-, 6- or 7-membered rings or which may be interrupted by from 1 to 5 oxygen atoms, or are each a radical of the formula

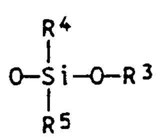

where $R^3$ is as defined above and $R^4$ and $R^5$ are identical or different and each is independently of the other $C_1$-$C_{20}$-alkyl, $C_1$-$C_{20}$alkoxy or the radical $(O)_nR^3$, where n and $R^3$ are each as defined above, or $R^1$ may also be $C_1$-$C_{20}$-alkyl, with the proviso that at least one of the radicals $R^1$ and $R^2$ is a radical of the formula

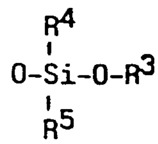

4. An optical recording medium as claimed in claim 3, which contains a silicon naphthalocyanine of the formula I where Nc is the radical of an unsubstituted naphthalocyanine system.

**Revendications**

1. Siliciumnaphtalocyanines de la formule I

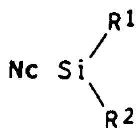

(I),

dans laquelle

Nc représente le reste d'un système naphtalocyaninique qui peut être substitué par un radical alkyle en $C_1$-$C_{12}$, alcoxy en $C_1$-$C_{12}$, aryle en $C_6$-$C_{12}$, qui est éventuellement substitué par un radical alkyle en $C_1$-$C_4$, ou un radical phénylalkyle($C_1$-$C_6$) dont le noyau phényle est éventuellement substitué et

$R^1$ et $R^2$, sont identiques ou différents et représentent, chacun indépendamment l'un de l'autre, un reste de la formule $(O)_nR^3$ dans laquelle n est égal à 0 ou à 1 et $R^3$ représente un reste qui comporte de 2 à 20 atomes de carbone et qui contient de 1 à 5 doubles liaisons et/ou de 1 à 3 triples liaisons et qui peut en outre contenir de 1 à 4 noyaux phényle ou 1 à 3 cycles pentagonaux à heptagonaux, isocycliques, saturés ou insaturés, ou qui est éventuellement interrompu par de 1 à 5 atomes d'oxygène, ou un reste de la formule

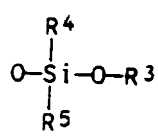

dans laquelle $R^3$ possède les significations qui lui ont été attribuées ci-dessus et $R^4$ et $R^5$ sont identiques ou différents et représentent, chacun indépendamment l'un de l'autre, un radical alkyle en $C_1$-$C_{20}$, un radical alcoxy en $C_1$-$C_{20}$, ou le reste $(O)_nR^3$ ou n et $R^3$ possèdent chacun les significations qui leur ont été précédemment attribuées, ou bien le symbole $R^1$ peut aussi représenter un radical alkyle en $C_1$-$C_{20}$, avec la condition qu'au moins l'un des symboles $R^1$ et $R^2$ représente le reste de la formule

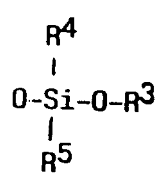

2. Siliciumnaphtalocyanines de la formule I suivant la revendication 1, caractérisées en ce que Nc représente les restes d'un système naphtalocyaninique non substitué.

3. Milieu d'enregistrement optique qui comprend un support et une couche sensible aux rayonnements, caractérisé en ce que la couche sensible aux rayonnements contient une siliciumnaphtalocyanine de la formule I

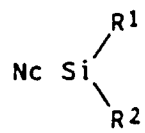

(I)

dans laquelle

Nc représente le reste d'un système naphtalocyaninique qui peut être substitué par un radical alkyle en $C_1$-$C_{12}$, alcoxy en $C_1$-$C_{12}$, aryle en $C_6$-$C_{12}$, qui est éventuellement substitué par un radical alkyle en $C_1$-$C_4$, ou un radical phénylalkyle($C_1$-$C_6$) dont le noyau phényle est éventuellement substitué et

$R^1$ et $R^2$, sont identiques ou différents et représentent, chacun indépendamment l'un de l'autre, un reste de la formule $(O)_nR^3$ dans laquelle n est égal à 0 ou à 1 et $R^3$ représente un reste qui comporte de 2 à 20 atomes de carbone et qui contient de 1 à 5 doubles liaisons et/ou de 1 à 3 triples liaisons et qui peut en outre contenir de 1 à 4 noyaux phényle ou 1 à 3 cycles pentagonaux à heptagonaux, isocycliques, saturés ou insaturés, ou qui est éventuellement interrompu par de 1 à 5 atomes d'oxygène, ou un reste de la formule

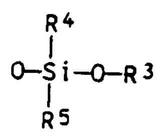

dans laquelle $R^3$ possède les significations qui lui ont été attribuées ci-dessus et $R^4$ et $R^5$ sont identiques ou différents et représentent, chacun indépendamment l'un de l'autre, un radical alkyle en $C_1$-$C_{20}$, un radical alcoxy en $C_1$-$C_{20}$, ou le reste $(O)_nR^3$ ou n et $R^3$ possèdent chacun les significations qui leur ont été précédemment attribuées, ou bien le symbole $R^1$ peut aussi représenter un radical alkyle en $C_1$-$C_{20}$, avec la condition qu'au moins l'un des symboles $R^1$ et $R^2$ représente le reste de la formule

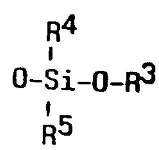

4. Milieu d'enregistrement optique suivant la revendication 3, caractérisé en ce qu'il contient une siliciumnaphtalocyanine de la formule I dans laquelle Nc représente le reste d'un système naphtalocyaninique non substitué.